# EUROPÄISCHE PATENTSCHRIFT

(11) **EP 0 478 915 B1**
(45) Veröffentlichungstag und Bekanntmachung des Hinweises auf die Patenterteilung: **15.09.1993**
(21) Anmeldenummer: 91112567.2
(22) Anmeldetag: 26.07.1991
(51) Int. Cl.: F01L 1/04, F16H 53/02

(54) **Mit einem Steuernocken versehene Steuerwelle zur periodischen Betätigung von Maschineneinrichtungen, insbesondere Gaswechselventile für Brennkraftmaschinen**
Control camshaft for periodically operating machine devices, particularly for valves in an internal combustion engine
Arbre de commande muni de cames pour actionner périodiquement des dispositifs de machines, notamment pour soupapes d'un moteur à combustion interne

(30) Priorität: 27.09.1990 DE 4030568
(43) Veröffentlichungstag der Anmeldung: 08.04.1992
(73) Patentinhaber: Bayerische Motoren Werke Aktiengesellschaft, 80788 München (DE)
(72) Erfinder: Hösl, Josef, W-8025 Unterhaching (DE); Kaindl, Wolfgang, W-8052 Moosburg (DE); Heitmann, Friedrich-Thomas, Dr., W-8044 Unterschleissheim (DE); Helfrich, Oliver, W-8000 München 83 (DE); Nanos, Sis, W-8000 München 90 (DE); Heiler, Josef, W-8019 Steinhöring (DE)

(56) Entgegenhaltungen:
- DE-A- 2 232 438
- DE-A- 3 303 629
- DE-C- 3 720 597
- GB-A- 2 123 116
- US-A- 3 110 195

## Beschreibung

Die Erfindung betrifft gemäß dem Oberbegriff des Patentanspruches 1 eine mit Steuernocken versehene Steuerwelle zur periodischen Betätigung von Maschineneinrichtungen, insbesondere Gaswechselventilen in Brennkraftmaschinen, mit über die Länge der Steuerwelle verteilt angeordneten Ausgleichsmassen.

Eine derartige Steuerwelle ist beispielsweise aus der DE-C-22 32 438 bekannt. Diese bekannte Steuerwelle ist hohl gestaltet, wobei zum Ausgleich von Massenkräften und Massenmomenten vorgesehene Ausgleichsgewichte in den Hohlräumen der Nocken auf den von den Nockenerhebungen abgewandten Seiten angeordnet sind. Nachteilig hierbei ist, daß sämtliche Ausgleichsmassen als zusätzliche, mit Mehraufwand anzubringende Einzelteile ausgebildet sind.

Weiter ist aus der GB-A-2 123 116 eine Nockenwelle für eine Einspritzpumpe bekannt, bei der zur Erhöhung der Wellensteifigkeit zwischen benachbarten Steuernocken entweder konzentrische Scheiben oder beiderseits der Steuernocken unmittelbar benachbart angeordnete nockenähnliche Scheiben vorgesehen sind. Den konzentrisch angeordneten Scheiben kommt eine Wirkung als Ausgleichsmassen nicht zu, und die nockenähnlichen Scheiben bewirken durch ihre konturbezogene Zuordnung zu den Steuernocken eine Steigerung der Wellenunwucht. Der Erfindung liegt die Aufgabe zugrunde, für eine gattungsgemäße Steuerwelle eine Anordnung von Ausgleichsmassen aufzuzeigen, die es ermöglicht, entsprechend den jeweiligen Einbauverhältnissen der Steuerwelle eine relativ große Anzahl relativ kleiner Ausgleichsmassen ohne Beschränkung der Kompensation der freien Kräfte und Momente der ersten Steuerwellenordnung dem vorhandenen Einbauraum optimal angepaßt vorzusehen.

Zur Lösung dieser Aufgabe wird gemäß dem kennzeichnenden Teil des Patentanspruches 1 vorgeschlagen, daß zur Drehachse der Steuerwelle exzentrisch angeordnete Schaft-Abschnitte der den Steuernocken benachbarten Wellenschäfte der Steuerwelle als Ausgleichsmassen dienen.

Der Vorteil der Erfindung ist darin zu sehen, daß Teile der Wellenschäfte der Steuerwelle durch radialen Versatz aus der Drehachse der Steuerwelle die jeweilige Ausgleichsmasse bilden. Bei Vollschaft- und relativ dickwandigen Hohlschaft-Steuerwellen erübrigen sich damit gesondert angeordnete Gewichte als Ausgleichsmassen. Im Falle relativ dünnwandiger Hohlschaft-Steuerwellen reduziert sich die Masse eventuell zusätzlicher Ausgleichsgewichte erheblich. Die Erfindung ermöglicht es somit, Steuerwellen ohne wesentliche Gewichtssteigerung durch Gestaltung der Ausgleichsmassen mittels radial versetzter Wellenschaft-Abschnitte auszubilden. Besonders vorteilhaft läßt sich die Erfindung bei einer als Gußteil gestalteten Steuerwelle verwirklichen durch einfache Ausformung der exzentrisch angeordneten Abschnitte der Steuerwelle in der Gießform.

Die mit einem Gießverfahren besonders kostengünstig herstellbaren Steuerwellen nach der Erfindung finden eine bevorzugte Anwendung bei Viertakt-Brennkraftmaschinen mit für Ein- und Auslaß-Ventile gesonderten Steuerwellen, vor allem bei mehreren gleichartigen Gaswechselventilen je Brennraum/Zylinder der Brennkraftmaschine. Damit lassen sich in einem bestimmten Drehzahlbereich einer derartigen Brennkraftmaschine an deren elastischen Aufhängungen besonders deutlich wirkende freie Kräfte und Momente der 0,5. Motorordnung (= 1. Steuerwellenordnung) aus den beschleunigten Ventiltriebmassen in gewünschtem Umfang kompensieren oder die Wirkrichtungen vorteilhaft ändern, so daß bei gleichem Komfort einfachere Aufhängungen genügen.

Hierfür ist ferner denkbar, bei oben gesteuerten Viertakt-Brennkraftmaschinen mit mehreren Steuerwellen für gleichartige Gaswechselventile die Ausgleichsmassen zur Kompensation der freien Kräfte und Momente der 0,5. Motorordnung auf die gegebenen Steuerwellen verteilt anzuordnen. Damit ist die Anordnung der Ausgleichsmassen ggf. den Einbauverhältnissen der Steuerwellen im Zylinderkopf besser anpaßbar.

Weitere Gestaltungen von Steuerwellen nach der Erfindung sind in den übrigen Unteransprüchen beschrieben, die zum einen eine aus Rohrabschnitten gebaute Steuerwelle und zum anderen eine Vollschaft-Steuerwelle mit einer über die gesamte Länge der Steuerwelle zur Drehachse schräg angeordnete Bohrung umfassen.

Die Erfindung ist anhand von in der Zeichnung abschnittsweise dargestellten Steuerwellen unterschiedlicher Gestaltung beschrieben.

Es zeigt:
- Fig. 1: eine Vollschaft-Steuerwelle mit exzentrischen Schaft-Abschnitten als Ausgleichsmassen, vorzugsweise in Gußausführung,
- Fig. 2: eine dünnwandige Hohlschaft-Steuerwelle mit exzentrisch angeordneten Rohrabschnitten als Ausgleichsmassen, und
- Fig. 3: eine dickwandige Hohlschaft-Steuerwelle mit exzentrischen Schaft-Abschnitten als Ausgleichsmassen.

Eine lediglich abschnittsweise dargestellte Vollschaft- oder dickwandige Hohlschaft-Steuerwelle 1 in Gußausführung weist paarweise angeordnete Steuernocken 2 zur Betätigung gleichartiger Gaswechselventile einer Viertakt-Brennkraftmaschine (nicht gezeigt) auf. Jede Gruppe der zum Antrieb mehrerer Gaswechselventile je Brennraum der Brennkraftmaschine vorgesehenen Steuernocken 2 steht miteinander über einen Lagerbund 3 in drehfester Verbindung, während Wellenschäfte 4 die benachbarten Gruppen der Steuernocken 2 miteinander drehfest verbinden. Zur Kompensation der durch die Steuernocken 2 gegebenen Unwuchten einerseits und zur Kompensation der aus den beschleunigten Ventiltriebmassen resultierenden freien Kräfte und Momente der 1. Steuerwellenordnung bzw. der 0,5ten Motorordnung andererseits ist die Steuerwelle 1 mit zur Drehachse 5 außermittig über die Länge der Steuerwelle 1 verteilt angeordneten Ausgleichsmassen 6 ausgerüstet. Als Ausgleichsmassen 6 dienen zwischen den Gruppen von Steuernocken 2 zur Drehachse 5 exzentrisch angeordnete Abschnitte 7 der Steuerwelle 1 bzw. der Wellenschäfte 4.

Für eine obengesteuerte Brennkraftmaschine mit einem über Schraubbolzen angeordneten Zylinderkopf weist die Steuerwelle 1 einen über axial beabstandet angeordnete Abschnitte 7 gebildeten Freigang 9 auf für ein an den Schraubbolzen ansetzbares, durch Kreise 8 versinnbildlichtes Schraubwerkzeug.

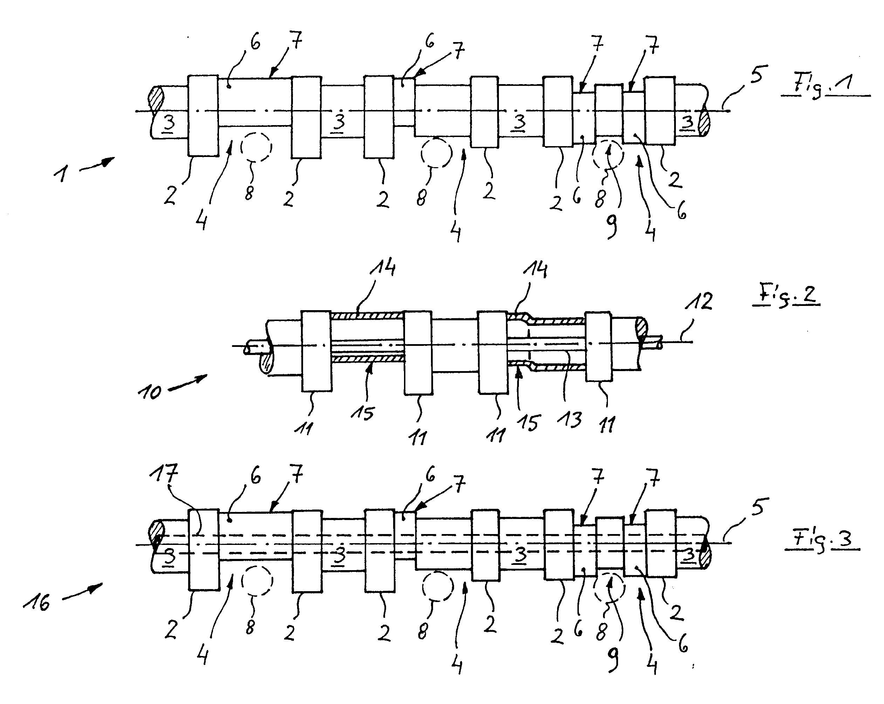

Bei einer Steuerwelle 10 gemäß Fig. 2 sind die Steuernocken 11 auf einem zur Drehachse 12 konzentrischen Träger 13 positioniert. Bei dieser gebauten Steuerwelle 11 sind die als Ausgleichsmassen 14 dienende Abschnitte 15 zwischen den benachbarten Steuernocken 11 aus Rohrabschnitten gebildet. Eine weitere Möglichkeit einer gebauten Steuerwelle besteht darin, Steuernocken auf einem Rohr anzuordnen, in einer Form zu positionieren und mittels eines hohen hydraulischen Druckes im Innern des Rohres neben der drehfesten Verbindung mit den Steuernocken eine Ausformung der als Augleichsmassen dienenden Abschnitte zu bewirken.

Eine in Fig. 3 gezeigte Steuerwelle 16 weist eine diese der Länge nach durchsetzende Bohrung 17 auf, ansonsten ist die Steuerwelle 16 identisch mit der Steuerwelle 1 in Fig. 1 und weist übereinstimmende Bezugszeichen auf. Die Bohrung 17 kann ferner über die Länge der Steuerwelle 16 schräg zur Drehachse 5 angeordnet sein zur Erzielung von Ausgleichsmassen insbesondere in den Endbereichen der Steuerwelle 16.

Im Rahmen der Erfindung können die als Ausgleichsmassen dienenden Abschnitte der Steuerwelle unter Beachtung des aus Festigkeitsgründen erforderlichen Wellenquerschnittes auch durch Materialabtragung gebildet werden. Dies kann entweder durch flächige Abtragung oder durch axial oder radial angeordnete Ausnehmungen erreicht sein.

Weiter kann im Rahmen der Erfindung eine erfindungsgemäß gestaltete Steuerwelle mit einem Antriebsrad ausgrüstet sein, das gemäß der US-PS 3,110,195 mit einer Ausgleichsmasse versehen ist.

## Patentansprüche

1. Steuerwelle mit Steuernocken zur periodischen Betätigung von Maschineneinrichtungen, insbesondere Gaswechselventile in Brennkraftmaschinen,
- mit über die Länge der Steuerwelle (1, 10, 16) verteilt angeordneten Ausgleichsmassen (6, 14) zum wesentlichen Ausgleich der aus den beschleunigten Massen der Maschineneinrichtung (Gaswechselventile) resultierenden freien Kräfte und Momente der 1. Steuerwellenordnung,
dadurch gekennzeichnet,
- daß zur Drehachse (5, 12) der Steuerwelle (1, 10, 16) exzentrisch angeordnete Schaft-Abschnitte (7, 15) der den Steuernocken ( 2, 11 ) benachbarten Wellenschäfte (4) der Steuerwelle als Ausgleichsmassen (6, 14) dienen.

2. Steuerwelle nach Anspruch 1, für eine oben gesteuerte Brennkraftmaschine mit einem über Schraubbolzen angeordneten Zylinderkopf,
dadurch gekennzeichnet,
- daß im Bereich eines Schraubbolzens ein als Ausgleichsmasse (6) dienender Schaft-Abschnitt (7) vorgesehen ist, der
- in einer vorbestimmten Drehlage einen Freigang (9) für ein am Schraubbolzen ansetzbares Schraubwerkzeug (Kreis 8) bildet.

3. Steuerwelle nach einem der Ansprüche 1 oder 2, gekennzeichnet durch eine Vollschaft-Steuerwelle (1) in Gußausführung.

4. Steuerwelle nach einem der Ansprüche 1 oder 2, in gebauter Ausführung mit auf einem relativ dünnwandigen Rohr angeordneten gesonderten Steuernocken,
dadurch gekennzeichnet,
- daß als Ausgleichsmassen (14) dienenden Schaft-Abschnitte (15) aus Rohrabschnitten gebildet sind.

5. Steuerwelle nach einem der Ansprüche 1 oder 2, in gebauter Ausführung mit auf einem zur Drehachse (12) der Steuerwelle (10) koaxialen Träger (13) positionierten Steuernocken (11),
dadurch gekennzeichnet,
- daß zwischen den Steuernocken (11) angeordnete Rohrabschnitte exzentrische Schaft-Abschnitte (15) als Ausgleichsmassen (14) aufweisen.

6. Steuerwelle nach Anspruch 1, dadurch gekennzeichnet, daß die Vollschaft-steuerwelle (1) eine schräg zur Drehachse (5) angeordnete Ausnehmung (Bohrung 17) aufweist.

## Claims

1. A control shaft with control cams for the periodic actuation of machine devices, especially gas-change valves in internal combustion engines,
- with equalizing masses (6, 14) distributed over the length of the control shaft (1, 10, 16) for the substantial equalization of the free forces and moments of the 1st control shaft arrangement resulting from the accelerated masses of the machine device (gas-change valves),
characterised in that
- shank sections (7, 15) of the shaft shanks (4) of the control shaft (1, 10, 16) are arranged eccentrically to the rotational axis (5, 12) of the control shaft and adjacent to the control cams (2, 11) to serve as equalizing masses (6, 14).

2. A control shaft according to Claim 1 for an overhead-controlled internal combustion engine with a cylinder head arranged by means of screw bolts,
characterised in that
- in the region of a screw bolt, a shank section (7) is provided to serve as an equalizing mass (6) which
- in a predetermined rotational position, forms a free passage (9) for a screw tool (circle 8) which is adapted to be applied to the screw bolt.

3. A control shaft according to either one of Claims 1 or 2, characterised by a solid shank control shaft (1) of cast construction.

4. A control shaft according to either one of Claims 1 or 2 constructed so as to have separate control cams arranged on a relatively thin-walled tube,
characterised in that
- shank sections (15) serving as equalizing masses (14) are formed from tube sections.

5. A control shaft according to either one of Claims 1 or 2 constructed so as to have control cams (11) positioned on a carrier (13) coaxial to the rotational axis (12) of the control shaft (10),
characterised in that
- tube sections arranged between the control cams (11) have eccentric shank sections (15) as equalizing masses (14).

6. A control shaft according to Claim 1, characterised in that the solid shank control shaft (1) has a recess (bore 17) arranged obliquely to the rotational axis (5).

## Revendications

1. Arbre de commande avec cames pour l'actionnement périodique de dispositifs de machines, en particulier de soupapes de moteurs à combustion interne,
avec des masses d'équilibrage réparties sur la longueur de l'arbre de commande (1, 10, 16) servant à compenser sensiblement les forces et les moments libres, résultant des masses du dispositif de machine (soupapes) mis en accélération du premier ordre de l'arbre de commande,
caractérisé en ce que des sections de tiges, disposées de façon excentrées par rapport à l'axe de rotation (5, 12) de l'arbre de commande (10, 16) des tiges d'arbre (4), voisines des cames (2, 11), de l'arbre de commande servent de masses d'équilibrage (6, 14).

2. Arbre de commande selon la revendication 1, pour un moteur à combustion interne commandé en tête avec un culasse disposée au moyen de goujon filetés, caractérisé en ce que:
- dans la zone d'un goujon fileté il est prévu une section de tige (7) servant de masse d'équilibrage (6) qui
- pour une vitesse de rotation déterminée forme un passage libre (9) pour un tournevis (cercle 8) pouvant être placé sur le goujon fileté.

3. Arbre de commande selon l'une des revendications 1 ou 2, caractérisé par un arbre de commande (1) à tiges pleines réalisé en fonte.

4. Arbre de commande selon l'une des revendications 1 ou 2, dans une réalisation construite avec des cames séparées disposées sur un tube à paroi relativement mince caractérisé en ce que,
- les sections de tiges (15) servant de masses d'équilibrage (14), sont formées de section de tube.

5. Arbre de commande selon l'une des revendications 1 ou 2, dans une réalisation construite avec un came (11) de commande positionnée sur un support (13) coaxial à l'axe de rotation (12) de l'arbre de commande (10), caractérisé en ce que :
- des sections de tube disposées entre les cames (11) présentent des sections de tiges (15) servant de masses d'équilibrage (14).

6. Arbre de commande selon la revendication 1, caractérisé en ce que l'arbre de commande à tiges pleines (1) présente un évidement (alésage 17) disposé sur l'arbre de rotation (5).
